# EUROPEAN PATENT SPECIFICATION

(11) **EP 2 497 442 B1**
(45) Date of publication and mention of the grant of the patent: **19.11.2014**
(21) Application number: 11157737.5
(22) Date of filing: 10.03.2011
(51) Int. Cl.: A61C 9/00, B05C 17/015

(54) **A device for mixing and dispensing a dental material**
Vorrichtung zum Mischen und Ausgeben von Dentalmaterial
Dispositif pour mélanger et administrer un matériau dentaire

(43) Date of publication of application: 12.09.2012
(73) Proprietor: 3M Innovative Properties Company, Saint Paul, MN 55133-3427 (US)
(72) Inventor: Gramann, Jens, 82166 Gräfelfing (DE); Jelovac, Emir, 80639 München (DE)
(74) Representative: Hohmann, Arno

(56) References cited:
- EP-A1- 0 525 562
- DE-A1- 3 607 176
- US-B2- 6 921 002

## Description

### Field of the Invention

The invention relates to a device for mixing and dispensing a dental material, and in particular to a device which has at least two hydraulic actuators. The hydraulic actuators each comprise a plurality of thrust members which are movable relative to each other to provide for components of the dental material to be advanced toward a dispensing outlet.

### Background Art

In dentistry a variety of devices are available which allow for preparation and/or application of dental materials in a dentist's practice. In particular for preparation of materials that are typically used at larger amounts, like for example dental impression materials, devices have been developed that provide for automatic dispensing from packages and/or for mixing of such materials. An exemplary device for mixing and dispensing a dental impression material is for example available under the designation 3M™ ESPE™ Pentamix™ from 3M ESPE AG, Germany. Typically such a device allows for two material components to be simultaneously supplied from a package through a mixer where they are mixed. Often the devices provide for continuously extruding the components through a mixer, where the components are mixed as the components flow through the mixer and released from an outlet.

The devices further typically have a motor driven piston for extruding the material from a container. A variety of different drive concepts have been proposed for driving the piston at a relatively high force as it may be required for appropriately dispensing the dental material.

For example EP 1 700 639 discloses a device for dispensing a flowable substance. The device comprises at least one force transmitting member (for example a push-pull chain) adapted to transmit a pushing force in a direction toward or opposite the substance and which can be gathered non-linearly.

US 6,168,052 discloses an electrically driven dispensing appliance having an electric drive which acts via drive screws on thrust plates for dispensing material from cartridges. The drive screws are axially stationary and are in action relationship with a slide bearing said thrust plates. The electric drive comprises a first gear motor for a drive under high load during advance and relief, and a second motor for the drive under lower load during the retracting and fast advance motions.

US 6,921,002 B2 discloses a device for mixing and metering one or multi-component compounds from at least one cartridge. These compounds can be in the form of a basic component and a catalyst component for impression compounds for dental applications. This device includes a punch for admitting pressure to the cartridge. This punch is supported in a telescopically displaceable manner, and is associated with each cartridge. This device also includes a hydraulic circuit which is associated with said at least one punch so that it actuates a piston or a cylinder of a hydraulically actuated piston cylinder unit. This device includes at least one pump and a supply coritainer.

Although there is a variety of devices on the market which provide for automatic mixing and dispensing there is still a desire to minimize costs for manufacturing of such devices and for providing the devices with maximized reliability.

### Summary of the Invention

The invention is defined in claim 1. The invention relates to a device for mixing and dispensing a dental material from at least two components. The device comprises for each component a hydraulic actuator. The device is adapted such that the hydraulic actuator is operable to advance the respective component toward a dispensing outlet. Further each of the hydraulic actuators has at least three thrust members which are adapted to telescopically interact and move relative to each other.

The device is advantageous because it may provide for a preparation of a dental material at a maximized mixing quality but may help minimizing costs for such preparation. Further the device of the invention may be relatively uncomplex in design, relatively robust, and relatively easy to use. The invention may further allow for a device which is minimized in size. Therefore the space required for the device in a dental practice may be minimized. Further the device may operate at a minimized noise level. Thus the acceptance in a dental practice may be maximized.

The operation of the hydraulic actuator is provided through hydraulically activated movement of the thrust members relative to one another. A first of the three thrust members is arranged stationary in the device and a second thrust member and a third thrust member are arranged displaceable relative to the first thrust member. The second and third thrust members are also movable relative to each other. The second thrust member is arranged between the first and third thrust members. Thus the first, second and third thrust members telescopically interact with one another with the first thrust member movably accommodating the second thrust member, and the second thrust member movably accommodating the third thrust member.

In a further embodiment the device comprises at least one further thrust member between the first and the third thrust members with the first thrust member and the further thrust member(s) being movable relative to each other, and the third thrust member and the further thrust member(s) being movable relative to each other. The device may further comprise a plurality of thrust members between the first and the third thrust members with each of the thrust members being movable relative to all other thrust members. Preferably the movement of the thrust members relative to each other is a linear or generally linear movement, in particular an exclusive linear movement.

In one embodiment the third thrust member carries a piston to pressurize the respective component. Thus in operation of the hydraulic actuator the piston may be moved to advance the component toward the dispensing outlet by hydraulically activated movement of the thrust members.

In one embodiment the hydraulic actuator in a first operation mode is operated through hydraulically activated movement of the thrust members relative to each other in a forward direction toward the dispensing outlet. Further in an alternative second operation mode the hydraulic actuator may be retractable in an opposite backward direction. The retraction of the hydraulic actuator in the second operation mode may be hydraulically activated, but is preferably manually activated, or activated by spring load. Thus the complexity of the design of the actuator may be minimized. Further a manual or spring activated retraction may provide for a backward movement at a higher speed than the hydraulically activated forward movement. This may be advantageous for quickly changing a component container because the hydraulic actuator may be quickly removed from the container and thus may quickly release the container for exchange.

The device has at least two actuators each having at least three thrust members. Such at least two hydraulic actuators may be connected to a common hydraulic system.

For the purpose of this specification the term "connection" or "to connect" as it relates to the hydraulic system implies the establishment a fluid communication.

The hydraulic system is preferably adapted to hydraulically activate each of the hydraulic actuators. The hydraulic system may have a reservoir for holding a hydraulic fluid. Further the hydraulic system for each hydraulic actuator may comprise a supply for supplying the hydraulic fluid to the hydraulic actuator. The hydraulic system further may have at least one pump for pressurizing the hydraulic fluid in the supply. Each supply between the pump and the hydraulic actuator are preferably additionally connectable for fluid communication with the reservoir via a bypass. Each bypass may comprise a valve for alternatively opening or blocking the connection with the reservoir. Such a hydraulic system preferably allows the hydraulic pump to continuously run and to establish a stable operation of the hydraulic system. In particular variations in pressure as they may occur due to typical start behaviour of a pump within a hydraulic system may be avoided. It has been found that particularly the initial phase of a mixing and dispensing process requires a precise control of the flow of the components into the mixer. To overcome poor mixing at such an initial phase mixers had been provided which have a special interior design, for example mixers that comprise a deflector or delay channel for one component to reproducibly cause a pre-flow of one component. The present invention is advantageous because it may provide for precisely controlled flow of the components into the mixer already during the initial phase of mixing and dispensing.

In a further embodiment the hydraulic system has a common supply which diverts in the at least two supplies. The device may further have one pump within the common supply for pressurizing the hydraulic fluid in the at least two supplies. In this embodiment the hydraulic system may only have one pump. Further each of the supplies may have a control valve for individually controlling the flow of hydraulic fluid in the respective supplies. The control valve may in particular provide for controlling the flow of hydraulic fluid at a predetermined flow ratio.

In still a further embodiment the device has a pump for each supply for pressurizing the hydraulic fluid in the respective supply. Thus the pumps may allow for individually control of the flow of hydraulic fluid in each supply. Therefore the at least two pumps may be driven to provide flow rates of the hydraulic fluid at a predetermined ratio relative to each other.

The flow ratio - either controlled by the control valve or by the pumps ― may approximately correspond to a desired mixing ratio of the components to form the dental material. For example the device may have differently sized hydraulic actuators for providing different forces for advancing the components. The actuators may have different cross-sections in a plane perpendicular to the forward and backward direction which are effective for being pressurized by the hydraulic fluid. The areas of the cross-sections may for example in ratio correspond to the mixing ratio of the components. And accordingly the flow ratios of the hydraulic fluid toward the hydraulic actuators may also correspond to the mixing ratio of the components.

According to the invention the first thrust member forms a first hydraulic cylinder which movably accommodates the second thrust member, the second thrust member forms a first plunger in the first thrust member and further forms a second hydraulic cylinder which movably accommodates the third thrust member. Further the third thrust member forms a second plunger in the second thrust member. The inner diameter of the first cylinder is greater than the outer diameter of the first plunger, and the gap between the first cylinder and the first plunger is sealed by a first annular seal fixed at the first cylinder. Further the inner diameter of the second cylinder is greater than the outer diameter of the second plunger, and the gap between the second cylinder and the second plunger is sealed by a second annular seal fixed at the second plunger. Therefore the second thrust member may be free of any seal. Further the second thrust member may be the only thrust member requiring a finishing which is allows for sliding on the seals that are arranged at the other cooperating thrust members. Thus costs for manufacturing of the hydraulic actuator may be minimized.

The device may comprise at least two containers each containing a component. The components may be adapted to form a dental material, for example a dental impression material, when merged or mixed.

The device may comprise the mixer. The mixer may have at least two inlets each being connected or connectable with a container containing the component, and a mixer nozzle for releasing the mixture. The mixer may be a dynamic mixer comprising a mixing rotor which can be or is driven from outside the mixer, for example by a motor. Alternatively the mixer may be a static mixer which has one or more static mixing elements. The mixing rotor or the static mixing elements may agitate the components as they flow through the mixer and thus cause the components to merge and form the mixture.

A further aspect according to the background of the invention relates to a method of mixing and dispensing a dental material. The method comprises the steps of:
- providing a device for mixing and dispensing a dental material from at least two components according to the invention, the device having at least two hydraulic actuators for advancing the components toward a mixer;
- providing at least two components that are to be mixed at a desired predetermined mixing ratio;
- controlling the hydraulic actuators such that the components flow toward the mixer at a first mixing ratio during a first mixing and dispensing phase; and
- controlling the hydraulic actuators to cause the components to flow toward the mixer at a second mixing ratio during a second mixing and dispensing phase; and
- wherein the first and second mixing and dispensing phases belong to one common mixing and dispensing phase to provide a quantity of a mixture; and
- wherein the first and second mixing ratios deviate or are different from the desired mixing ratio.

The hydraulic actuators may be controlled such that the average mixing ratio over the first, second phase and optionally a third phase are performed within one contiguous mixing and dispensing phase and such that the quantity achieved therefrom includes the components at the desired predetermined mixing ratio.

Thus at the beginning of a mixing process a pre-flow of one component into the mixer may be caused by control of the hydraulic actuators. It has for example been found that a more homogeneous mixing may be achieved if a catalyser component reaches the mixer before a base component of a dental impression material. Once that pre-flow has been established in the first mixing and dispensing phases the flow ratio of the catalyser and base components may be changed in the second mixing and dispensing phase such that the overall quantity of the mixture comprises the components at the desired mixing ratio.

### Brief Description of the Figures

- Fig. 1: is a perspective view of a mixing and dispensing device according to an embodiment of the invention;
- Fig. 2: is a cross-sectional view of a part of the mixing and dispensing device according to an embodiment of the invention;
- Fig. 3: is a cross-sectional view of a hydraulic actuator according to an embodiment of the invention;
- Fig. 4: is a cross-sectional view of the part of the mixing and dispensing device shown in Fig 2, but at a different operation stage;
- Fig. 5: is a schematic plan illustrating a hydraulic system according to an embodiment of the invention; and
- Fig. 6: is a schematic plan illustrating a hydraulic system according to another embodiment of the invention.

### Detailed Description of the Invention

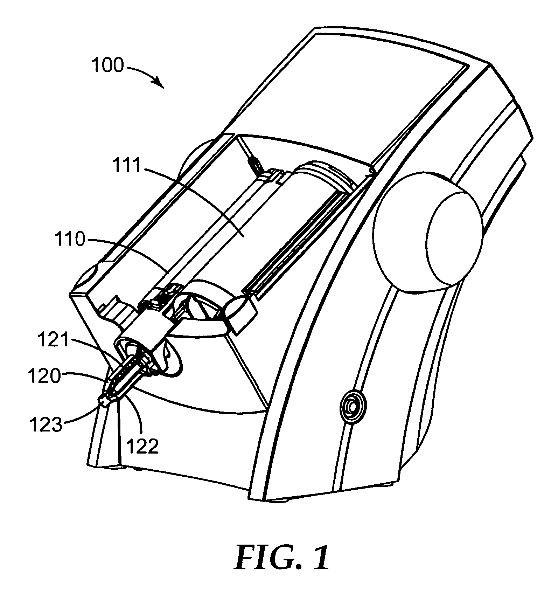

Fig. 1 shows a device 100 for mixing and dispensing dental materials. The device 100 shown may for example be used to mix and dispense a hardenable dental impression material. Such a dental impression material may be used to fill a dental tray which is then placed into a patient's mouth to take a dental impression.

The device 100 in the example shown is motorized and therefore allows for automatic mixing the dental material from two components and for automatic dispensation of the mixture. The device 100 holds the two components of the dental material in containers 110, 111 and is adapted to advance the components toward a mixer 120 in which the components can be mixed. The mixer 120 is removably attached to the device 100 such that it can be replaced by a fresh mixer after use. The mixer 120 has a mixing chamber formed between a rotatable mixing rotor 121 and a mixer housing 122 and is connectable with the containers 110, 111 such that the individual components can flow into the mixing chamber of the mixer 120. The mixture can exit through a mixer nozzle 123. The device 100 is adapted to drive the mixing rotor 121 so as to mix the components in the mixing chamber as they flow through the mixer 120. The device 100 thus implements a continuous dynamic mixing process in which components can be continuously supplied into the mixing chamber and in which the mixture from the components can be dispensed continuously from the mixer.

The device 100 in the example has for each component a hydraulic actuator (not shown in this Figure) which allows the respective component to be advanced toward the mixer 120.

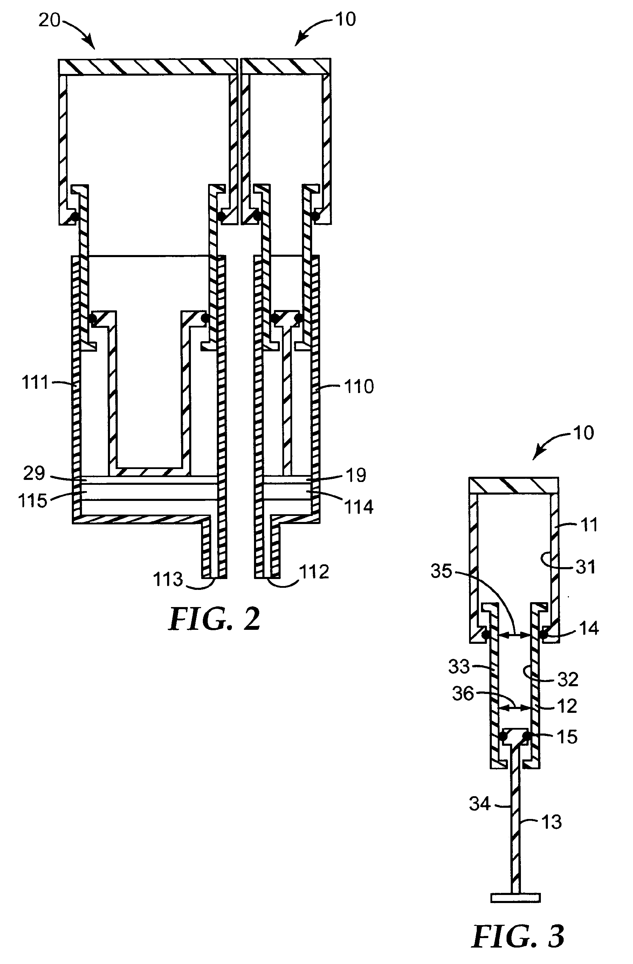

Fig. 2 shows a first hydraulic actuator 10 and a second hydraulic actuator 20 which may be arranged within the device 100 shown in Fig. 1. The containers 110, 111 are disposed relative to the actuators 10, 20 such that the actuators can advance the components (not shown) stored in the containers 110, 111 toward dispensing outlets 112, 113 of the respective containers 110, 111.

In the example shown the containers 110, 111 are cartridges having cartridge pistons 114, 115 respectively. Each container 110/111 thus may form a chamber for holding a component and the chamber may be closed by the cartridge piston 114/115 which is movably arranged within the chamber. The chamber opens into the dispensing outlet 112/113 so that the component can be extruded from the chamber by moving the cartridge piston 114/115 in the chamber toward the outlet 112/113. In another example the components may be provided in foil bags and the foil bags may be received in the containers. Such a foil bag may be formed from a relatively thin and collabsible foil. The foil bag may be pierced open at one side and compressed to extrude the component from the foil bag. In one embodiment the dispensing outlet may form part of the foil bag rather than forming a part of the cartridge. In this case the foil bag may be connected to a substantially rigid cap at which the dispensing outlet is formed. The foil bag may be pieced open by a needle or cutting blade inserted from outside through the dispensing outlet of the cap. Alternatively the cap may comprise piercing members which automatically pierce the foil bag open as the foil bag is pressurized for extruding the component. Such a foil bag is described for example in US 6,012,610. However the skilled person may recognize different container designs which may be likewise used with the present invention.

The first and second hydraulic actuators 10, 20 in the example carry a first piston 19 and a second piston 29, respectively. The first and second pistons 19, 29 are dimensioned to fit within the chambers of the containers 110, 111, respectively, and the first and second hydraulic actuators 10, 20 are adapted to move the respective first and second pistons 19, 29 and thereby to advance the respective component toward the dispensing outlet.

Fig. 3 only shows the first hydraulic actuator 10 for detailed explanation and therefore is generally referred to as "hydraulic actuator". The second hydraulic actuator 20 preferably comprises the same features as the hydraulic actuator 10. However, features of the first and second actuators 10, 20 may nevertheless differ in size even though such features may be technically identical otherwise.

The hydraulic actuator 10 has a first thrust member 11 which is preferably arranged stationary in the mixing and dispensing device of the present invention. Thus the first thrust member 11 may be fixed at the mixing and dispensing device and may not move relative to the device when the hydraulic drive is operated. The hydraulic actuator 10 has a second thrust member 12 which is movably accommodated within the first thrust member 11, and further has a third thrust member 13 which is movably arranged within the second thrust member 12. The first thrust member 11 forms a first hollow cylinder 31, and the second thrust member forms a second hollow cylinder 32. The second thrust member 12 further forms a first plunger 33 for cooperation with the first cylinder 31 of the first thrust member. Further the third thrust member 13 forms a second plunger 34 for cooperation with the second cylinder 32 of the second thrust member. Therefore the hydraulic drive has two plungers which are movable into each other and these two plungers are further movable into a further cylinder. Thus the first, second and third thrust members 11, 12, 13 are adapted to telescopically move relative to each other. Preferably the first and second plungers 32, 34 are sealingly and slidably arranged within the first and second cylinders 31, 32, respectively. Therefore the first, second and third thrust members 11, 12, 13 may be hydraulically movable relative to each other.

The hydraulic actuator has a certain arrangement of seals for sealing the thrust members with one another. A first seal 14 is arranged at the first thrust member 11, and a second seal 15 is arranged at the third thrust member 13. Therefore the second thrust member 12 does not require any seal. Further the second thrust member 12 may be the only part of the hydraulic actuator 10 which requires precisely finished inner and outer surfaces for sliding on the first and second seals 14, 15. Further the second thrust member 12 may be the only part of the hydraulic actuator 10 which may need to be made resistant against wear from sliding with the seals. Therefore even though the hydraulic drive 10 has three thrust members it may be manufactured at efforts and costs that are similar to those related to the manufacturing of a hydraulic actuator having only two thrust members.

In one embodiment (not shown) two or more hydraulic actuators may have one common first thrust member. This common first thrust member may form at least two cylinders each movably accommodating a second thrust member, and that second thrust member further bears a third thrust member. This may help minimizing the amount of parts required for a hydraulic actuator, and therefore may help minimizing manufacturing costs.

The first plunger 33 has a first plunger cross-section 35 in a plane perpendicular to the length of the hydraulic actuator 10, and the second plunger 34 has a second plunger cross-section 36 in a plane perpendicular to the length of the hydraulic actuator 10. The length of the hydraulic actuator for the purpose of this specification is a dimension in which the first, second and third thrust members are substantially linearly movable relative to each other for operation of the hydraulic actuator. The first and second cross-sections 35, 36 correspond to areas which are pressurized by the hydraulic fluid upon hydraulic operation of the hydraulic actuator 10. Due to the described seal arrangement the first and second cross-sections 35, 36 are similar so that the first and second plungers 33, 34 can be advanced at similar forces without changing the pressure of the hydraulic fluid. Thus a hydraulic pump providing only for one constant pressure may be used. Therefore manufacturing costs may be further minimized.

The skilled person will recognize that the first and second cross-sections 35, 36 nevertheless are somewhat different, depending on a wall thickness of the second thrust member. It has however been found that such a difference in cross-section allows for extending the actuator at two slightly different forces and/or speeds. For example the hydraulic actuator may be controlled to extend by moving the first and second thrust members first without moving the third and second thrust members relative to each other. Thereby the actuator at a first partial movement extends at a first force. Subsequently the hydraulic actuator may be controlled to extend by moving the second and third thrust members without moving the first and second thrust members relative to each other. Thereby the actuator at a second partial movement extends at a second force which is slightly lower than the first force if the hydraulic pressure applied in the actuator is the same in the first and second partial movements. Thereby a difference in the required force for advancing a component in a container may be compensated. The skilled person will further recognize that the hydraulic actuator may be first moved at a lower force and subsequently at a higher force. To control such partial movements the hydraulic actuator may have a break for retaining at least two thrust members with one another. For example the first and second thrust members may be retained with each other while the second and third thrust members are enabled for movement with one another, or the second and third thrust members may be retained with each other while the second and first thrust member are enabled for movement with one another. The break may be a hydraulic or mechanical, or any other suitable brake.

The Figure shows the hydraulic actuator 10 at a somewhat extended stage, meaning with the first, second and third thrust members 11, 12, 13 placed within each other with their ends only. Relative to the extended stage the hydraulic drive may further be brought toward a retracted stage by moving the first, second and third thrust members 11, 12, 13 into each other. Thus the hydraulic actuator 10 is adapted to change in length. Preferably the hydraulic actuator 10 in a first operation mode can be operated through hydraulically activated movement of the thrust members relative to each other in a forward direction toward the extended stage. Further the hydraulic actuator 10 in an alternative second operation mode can be moved in an opposite backward direction toward the retracted stage. Retraction is preferably enabled non-hydraulically, for example manually or by spring load. This may help minimizing the complexity of the design of hydraulic actuator may help saving costs in the manufacturing and maintenance of the device.

The thrust members are preferably dimensioned in length such that the hydraulic actuator is variable in length at a ratio between a fully retracted stage and a fully extended stage of less than 1/2, preferably of approximately 1/3. Thus a device for mixing and dispensing may be relatively compact in size.

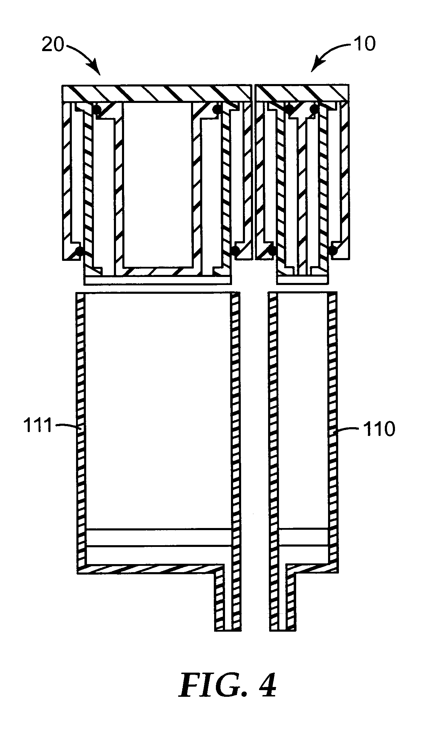

Fig. 4 shows the first and second hydraulic actuators 10, 20 at a fully retracted stage. The fully retracted stage of the first and second hydraulic actuators 10, 20 allows the containers 110, 111 to be removed from the mixing and dispensing device (not shown in detail). The first and second hydraulic actuators 10, 20 at the fully retracted stage are shorter in length than the containers 110, 111 in the same dimension. Nevertheless (as apparent from Fig. 2) the first and second hydraulic actuators 10, 20 allow for substantially fully emptying of the containers because the first and second hydraulic actuators 10, 20 are preferably extendable by more than twice of their length of the retracted stage.

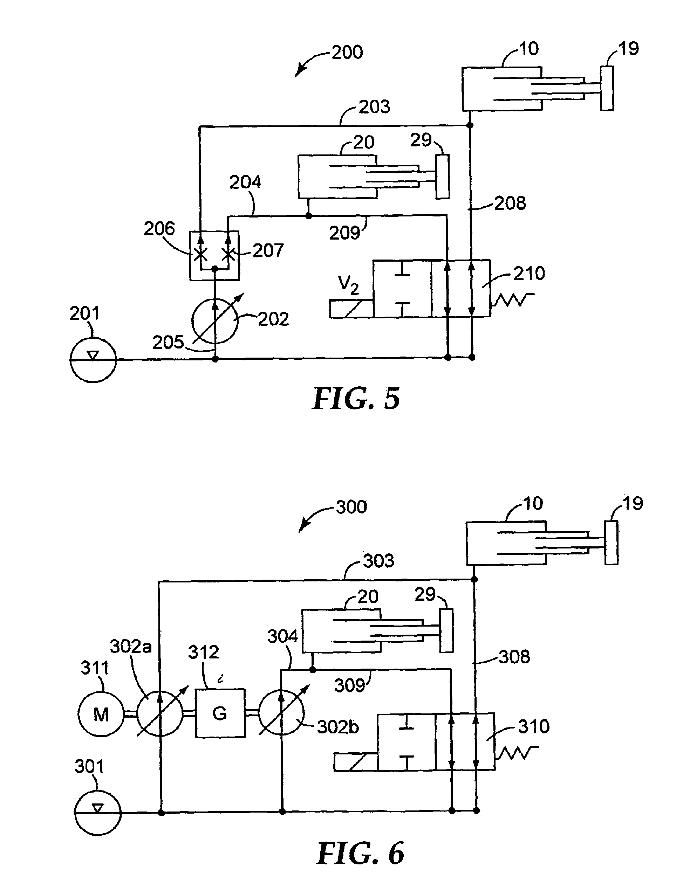

Fig. 5 shows the first and second hydraulic actuators 10, 20 in a hydraulic system 200. The hydraulic system 200 has a reservoir 201 for holding a hydraulic fluid. The hydraulic system 200 further has a pump 202 for pressurizing the hydraulic fluid, and first and second supplies 203, 204 for connecting the first and second hydraulic actuators, respectively, to the pressure side of the pump 202. The pump 202 is arranged within a common supply 205. Further the first and second supplies 203, 204 and the common supply are connected with each other at the pressure side of the pump 202. The first and second supplies 203, 204 have a first and second control valve 206, 207, respectively. The control valves 206, 207 are preferably controlled such that the first and second actuators 10, 20 provide a predetermined flow ratio of the components relative to each other. For example, in case similar dimensioned first and second hydraulic actuators 10, 20 are used the first and second control valves 206, 207 may be controlled to allow similar flow rates of hydraulic fluid to flow in the first and second supplies 203, 204, respectively, and toward the first and second hydraulic actuators 10, 20, respectively. Thus the first and second pistons 19, 29 may be advanced at similar speeds by the respective first and second hydraulic actuators 10, 20. The first and second control valves 206, 207 may be controlled electronically dependent on an actual movement provided by the first and second hydraulic actuators 10, 20, respectively. For example the first and second hydraulic actuators 10, 20 may comprise a measuring system which provides information which are indicative of a current position of the pistons advanced by the hydraulic actuators to a controller, and the controller may control the first and second control valves 206, 207 to provide a predetermined relative positioning of the pistons to each other.

The hydraulic system 200 further has a first and a second bypass 208, 209. The first bypass 208 connects the first supply 203 and the reservoir 201, whereas the second bypass connects the second supply 204 and the reservoir 201. Each of the first and second bypasses can be blocked or opened. In the opened stage of the bypasses hydraulic fluid in the respective supplies can flow back toward the reservoir 201. Therefore hydraulic fluid pumped by the pump 202 may not cause the thrust members of the actuators to move, but may directly flow back toward the reservoir. This is because the movement of the thrust members may require a certain friction to be overcome which the relatively low pressure built up in the supply may not provide for. Further in the open stage of the bypasses the thrust members may be enabled to be moved non-hydraulically. In particular the actuator may be retracted manually or by spring force. Hydraulic fluid displaced from the actuators may also flow toward the reservoir 201 via the bypasses.

In the closed stage of the bypasses the hydraulic fluid pumped by the pump 202 preferably causes the thrust members of the actuators to move.

The hydraulic system 200 has a four-port / two-way valve 210 which allows for the first and second bypasses 208, 209 to be alternately blocked or opened. The four-port / two-way valve may normally provide for the open stage of the bypasses but may be activated for switching to the closed stage. Therefore the control of the hydraulic system may be minimized in complexity. For example it may not be necessary to switch the pump on and off for activating and deactivating the actuators.

Fig. 6 shows a further hydraulic system 300 with the first and second hydraulic actuators 10, 20. The hydraulic system 300 has a reservoir 301 for holding a hydraulic fluid and first and second supplies 303, 304. The first supply 303 has a pump 302a, and the second supply 304 has a pump 302b. Thus each of the first and second supplies 303, 304 has a pump 302a/302b for pressurizing the hydraulic fluid. The first and second supplies 303, 304 further connect the first and second hydraulic actuators 10, 20, respectively, to the pressure sides of the pumps 302a/302b. The first and second pumps 302a/302b are preferably controlled such that the first and second actuators 10, 20 provide a predetermined flow ratio of the components relative to each other. For example, in case similar dimensioned first and second hydraulic actuators 10, 20 are used the first and second pumps 302a/302b may be controlled to provide for similar flow rates of hydraulic fluid in the first and second supplies 303, 304, respectively, and toward the first and second hydraulic actuators 10, 20, respectively. Thus the first and second pistons 19, 29 may be advanced at similar speeds by the respective first and second hydraulic actuators 10, 20. The first and second pumps 302a/302b may be driven by a common motor 311 such that the first and pumps 302a/302b run at the same or similar speeds. However for example in case differently dimensioned hydraulic actuators are used the first and second pumps 302a/302b may be driven at different speeds. In the example the motor 311 drives the first pump 302a and a transmission between the motor 311 and the second pump 302b is provided. The transmission may comprise a gear box 312 which provides for the first and second pumps 302a/302b to run at different speeds. The gear box 312 may be adapted to run the first and second pumps 302a/302b at a predetermined speeds ratio. Such a speed ratio may for example correspond to the mixing ratio of the components to be mixed to form the dental material. Further an individually driven motor for each of the first and second pumps 302a/302b may be used, and such motors may be driven at a predetermined speed ratio.

The actual positioning provided by the actuators may be captured as outlined in the example illustrated in Fig. 5 and used to control the motor speed or speeds.

The hydraulic system 300 further has first and second bypasses 308, 309. The first bypass 308 connects the first supply 303 and the reservoir 301, and the second bypass 309 connects the second supply 304 and the reservoir 301. Each of the first and second bypasses can be blocked or opened as outlined in the example shown in Fig. 5. The hydraulic system 300 again has a four-port / two-way valve 310 which enables the first and second bypasses 308, 309 to be alternately blocked or opened.

## Claims

1. A device (100) for mixing and dispensing a dental material from at least two components, comprising for each component a hydraulic actuator (10, 20), wherein the device is adapted such that the hydraulic actuator (10, 20) is operable to advance the respective component toward a dispensing outlet, wherein the hydraulic actuator (10, 20) having at least three thrust members (11, 12, 13) which for operation of the hydraulic actuator (10, 20) are adapted to telescopically move relative to each other, wherein a first of the three thrust members (11) is arranged stationary in the device and a second thrust member (12) and a third thrust member (13) are arranged displaceable relative to the first thrust member (11), and in which:
- the first thrust member (11) forms a first hydraulic cylinder (31) which movably accommodates the second thrust member (12),
- the second thrust member (12) forming a first plunger (33) in the first thrust member (11) and forming a second hydraulic cylinder (32) which movably accommodates the third thrust member (13),
- the third thrust member (13) forming a second plunger (34) in the second thrust member (12),
- wherein the inner diameter of the first cylinder (31) is greater than the outer diameter of the first plunger (33), and the gap between the first cylinder (31) and the first plunger (33) is sealed by a first annular seal (14) fixed at the first cylinder (31), and
- wherein the inner diameter of the second cylinder (32) is greater than the outer diameter of the second plunger (34), and the gap between the second cylinder (32) and the second plunger (34) is sealed by a second annular seal (15) fixed at the second plunger (34).

2. The device of claim 1, wherein the second and third thrust members (11, 12) are movable relative to each other, and wherein the second thrust member (12) is arranged between the first and third thrust members (11, 13).

3. The device of claim 1 or 2, comprising at least one further thrust member between the first and third thrust members with the first thrust member (11) and the further thrust member(s) being movable relative to each other, and the third thrust member (13) and the further thrust member(s) being movable relative to each other.

4. The device of any of the preceding claims, wherein the third thrust member (13) carries a piston (19, 29) to pressurize the respective component.

5. The device of any of the preceding claims, wherein the hydraulic actuator (10, 20) in a first operation mode is operated through hydraulically activated movement of the thrust members (11, 12, 13) relative to each other in a forward direction toward the dispensing outlet, and in an alternative second operation mode the hydraulic actuator (10, 20) is retractable in an opposite backward direction.

6. The device of claim 5, wherein retraction of the hydraulic actuator (10, 20) in the second operation mode is hydraulically activated, manually activated, or activated by spring load.

7. The device of any of the preceding claims, wherein the at least two hydraulic actuators (10, 20) are connected to a common hydraulic system (200, 300), wherein the hydraulic system (200, 300) is adapted to hydraulically activate each of the hydraulic actuators (10, 20).

8. The device of claim 7, wherein the hydraulic system (200, 300) has a reservoir (201, 301) for holding a hydraulic fluid, for each hydraulic actuator (10, 20) a supply (203, 204, 303, 304) for supplying the hydraulic fluid to one hydraulic actuator (10, 20), and at least one pump (202, 302a, 302b) for pressurizing the hydraulic fluid in the supply (203, 204, 303, 304), each supply (203, 204, 303, 304) between the pump (202, 302a, 302b) and the hydraulic actuator (10, 20) being additionally connectable for fluid communication with the reservoir (201, 301) via a bypass (208, 209, 308, 309), and wherein the bypass (208, 209, 308, 309) comprises a valve (210, 310) for alternatively opening or blocking the connection with the reservoir (201, 301).

9. The device of claim 8, in which the hydraulic system (200) has a common supply (205) which diverts in the at least two supplies (203, 204), the device further having one pump (202) within the common supply (205) for pressurizing the hydraulic fluid in the at least two supplies (203, 204).

10. The device of claim 9, in which the device has a pump for each supply for pressurizing the hydraulic fluid in the respective supply.

11. The device of claim 10, in which the at least two pumps are driven to provide flow rates of the hydraulic fluid at a predetermined ratio relative to each other.

12. The device of claim 11, wherein the flow rate ratio approximately corresponds to a desired mixing ratio of the components to form the dental material.

## Patentansprüche

1. Vorrichtung (100) zum Mischen und Abgeben eines Dentalmaterials aus mindestens zwei Komponenten, für jede Komponente einen hydraulischen Aktuator (10, 20) umfassend, wobei die Vorrichtung so gestaltet ist, dass der Aktuator (10, 20) im Stande ist, die jeweilige Komponente in Richtung eines Abgabeauslasses vorzuschieben, wobei der hydraulische Aktuator (10, 20) mindestens drei Druckstücke aufweist (11, 12, 13), die so gestaltet sind, dass sie sich zum Betreiben des hydraulischen Aktuators (10, 20) teleskopartig relativ zueinander bewegen, wobei ein erstes der drei Druckstücke (11) stationär in der Vorrichtung angeordnet ist und ein zweites Druckstück (12) und ein drittes Druckstück (13) verschiebbar zum ersten Druckstück (11) angeordnet sind und wobei:
- das erste Druckstück (11) einen ersten hydraulischen Zylinder bildet (31), welcher das zweite Druckstück (12) beweglich aufnimmt,
- das zweite Druckstück (12) einen ersten Stößel (33) in dem ersten Druckstück (11) bildet und einen zweiten hydraulischen Zylinder (32) bildet, welcher das dritte Druckstück (13) beweglich aufnimmt,
- das dritte Druckstück (13) einen zweiten Stößel (34) in dem zweiten Druckstück (12) bildet,
- wobei der Innendurchmesser des ersten Zylinders (31) größer ist als der Außendurchmesser des ersten Stößels (33) und der Abstand zwischen dem ersten Zylinder (31) und dem ersten Stößel (33) durch eine am ersten Zylinder (31) befestigte erste Ringspaltdichtung (14) abgedichtet ist, und
- wobei der Innendurchmesser des zweiten Zylinders (32) größer ist als der Außendurchmesser des zweiten Stößels (34) und der Abstand zwischen dem zweiten Zylinder (32) und dem zweiten Stößel (34) durch eine am zweiten Stößel (34) befestigte zweite Ringspaltdichtung (15) abgedichtet ist.

2. Vorrichtung nach Anspruch 1, wobei das zweite und das dritte Druckstück (11, 12) relativ zueinander beweglich sind, und wobei das zweite Druckstück (12) zwischen dem ersten und dem dritten Druckstück (11, 13) angeordnet ist.

3. Vorrichtung nach Anspruch 1 oder 2, mindestens ein weiteres Druckstück zwischen dem ersten und dem dritten Druckstück umfassend, wobei das erste Druckstück (11) und das weitere Druckstück beziehungsweise die weiteren Druckstücke relativ zueinander beweglich sind und das dritte Druckstück (13) und das weitere Druckstück beziehungsweise die weiteren Druckstücke relativ zueinander beweglich sind.

4. Vorrichtung nach einem der vorhergehenden Ansprüche, wobei das dritte Druckstück (13) einen Kolben (19, 29) führt, um die jeweilige Komponente unter Druck zu setzen.

5. Vorrichtung nach einem der vorhergehenden Ansprüche, wobei in einem ersten Betriebsmodus der hydraulische Aktuator (10, 20) durch hydraulisch aktivierte Bewegung der Druckstücke (11, 12, 13) relativ zueinander in einer Vorwärtsrichtung auf den Abgabeauslass zu betätigt wird und in einem alternativen zweiten Betriebsmodus der hydraulische Aktuator (10, 20) in einer entgegengesetzten Rückwärtsrichtung einfahrbar ist.

6. Vorrichtung nach Anspruch 5, wobei das Einfahren des hydraulischen Aktuators (10, 20) im zweiten Betriebsmodus hydraulisch aktiviert, manuell aktiviert oder durch Federkraft aktiviert wird.

7. Vorrichtung nach einem der vorhergehenden Ansprüche, wobei die mindestens zwei hydraulischen Aktuatoren (10, 20) an ein gemeinsames hydraulisches System (200, 300) angeschlossen sind, wobei das hydraulische System (200, 300) so gestaltet ist, dass es jeden der hydraulischen Aktuatoren (10, 20) hydraulisch aktiviert.

8. Vorrichtung nach Anspruch 7, wobei das Hydrauliksystem (200, 300) ein Reservoir (201, 301) zur Aufnahme eines Hydraulikfluids, für jeden hydraulischen Aktuator (10, 20) eine Zuführung (203, 204, 303, 304) zum Zuführen des Hydraulikfluids zu einem hydraulischen Aktuator (10, 20) und mindestens eine Pumpe (202, 302a, 302b) zur Druckbeaufschlagung des Hydraulikfluids in der Zuführung (203, 204, 303, 304) aufweist, wobei jede Zuführung (203, 204, 303, 304) zwischen der Pumpe (202, 302a, 302b) und dem hydraulischen Aktuator (10, 20) zusätzlich zur Fluidverbindung über einen Bypass (208, 209, 308, 309) mit dem Reservoir (201, 301) verbunden sein kann und wobei der Bypass (208, 209, 308, 309) ein Ventil (210, 310) zum alternativen Öffnen oder Sperren der Verbindung mit dem Reservoir (201, 301) umfasst.

9. Vorrichtung nach Anspruch 8, wobei das Hydrauliksystem (200) eine gemeinsame Zuführung (205) hat, welche sich in die mindestens zwei Zuführungen (203, 204) verzweigt, wobei die Vorrichtung zusätzlich eine Pumpe (202) innerhalb der gemeinsamen Zuführung (205) zur Druckbeaufschlagung des Hydraulikfluids in den mindestens zwei Zuführungen (203, 204) aufweist.

10. Vorrichtung nach Anspruch 9, wobei die Vorrichtung eine Pumpe für jede Zuführung zur Druckbeaufschlagung des Hydraulikfluids in der jeweiligen Zuführung aufweist.

11. Vorrichtung nach Anspruch 10, wobei die mindestens zwei Pumpen so gesteuert sind, dass sie den Durchfluss des Hydraulikfluids in einem vorbestimmten Verhältnis relativ zueinander bereitstellen.

12. Vorrichtung nach Anspruch 11, wobei das Durchflussverhältnis ungefähr einem gewünschten Mischungsverhältnis der Komponenten entspricht, die das Dentalmaterial bilden.

## Revendications

1. Dispositif (100) pour mélanger et distribuer un matériau dentaire à partir d'au moins deux composants, comprenant pour chaque composant un actionneur hydraulique (10, 20), dans lequel le dispositif est adapté de telle sorte que l'actionneur hydraulique (10, 20) peut être actionné pour faire avancer le composant respectif vers une sortie de distribution, dans lequel l'actionneur hydraulique (10, 20) présente au moins trois éléments de poussée (11, 12, 13) qui, pendant le fonctionnement de l'actionneur hydraulique (10, 20), sont adaptés pour se déplacer de manière télescopique l'un par rapport à l'autre, dans lequel un premier des trois éléments de poussée (11) est agencé fixe dans le dispositif et un deuxième élément de poussée (12) et un troisième élément de poussée (13) sont agencés mobiles par rapport au premier élément de poussée (11), et dans lequel :
- le premier élément de poussée (11) forme un premier vérin hydraulique (31) qui reçoit de façon mobile le deuxième élément de poussée (12),
- le deuxième élément de poussée (12) formant un premier piston (33) dans le premier élément de poussée (11) et formant un deuxième vérin hydraulique (32) qui reçoit de façon mobile le troisième élément de poussée (13),
- le troisième élément de poussée (13) formant un deuxième piston (34) dans le deuxième élément de poussée (12),
- dans lequel le diamètre intérieur du premier vérin (31) est supérieur au diamètre extérieur du premier piston (33), et l'espace entre le premier vérin (31) et le premier piston (33) est fermé de manière étanche par un premier joint d'étanchéité annulaire (14) fixé sur le premier vérin (31), et
- dans lequel le diamètre intérieur du deuxième vérin (32) est supérieur au diamètre extérieur du deuxième piston (34), et l'espace entre le deuxième vérin (32) et le deuxième piston (34) est fermé de manière étanche par un deuxième joint d'étanchéité annulaire (15) fixé sur le deuxième piston (34).

2. Dispositif selon la revendication 1, dans lequel les deuxième et troisième éléments de poussée (11, 12) sont mobiles l'un par rapport à l'autre, et dans lequel le deuxième élément de poussée (12) est agencé entre les premier et troisième éléments de poussée (11, 13).

3. Dispositif selon la revendication 1 ou 2, comprenant au moins un élément de poussée supplémentaire entre les premier et troisième éléments de poussée, le premier élément de poussée (11) et le ou les éléments de poussée supplémentaires étant mobiles les uns par rapport aux autres, et le troisième élément de poussée (13) et le ou les éléments de poussée supplémentaires étant mobiles les uns par rapport aux autres.

4. Dispositif selon l'une quelconque des revendications précédentes, dans lequel le troisième élément de poussée (13) porte un piston (19, 29) pour mettre sous pression le composant respectif.

5. Dispositif selon l'une quelconque des revendications précédentes, dans lequel l'actionneur hydraulique (10, 20) dans un premier mode de fonctionnement est actionné par un mouvement activé hydrauliquement des éléments de poussée (11, 12, 13) les uns par rapport aux autres dans une direction vers l'avant en direction de la sortie de distribution, et dans un deuxième mode de fonctionnement alternatif l'actionneur hydraulique (10, 20) est rétractable dans une direction arrière opposée.

6. Dispositif selon la revendication 5, dans lequel la rétraction de l'actionneur hydraulique (10, 20) dans le deuxième mode de fonctionnement est activée hydrauliquement, activée manuellement ou activée par une charge de ressort.

7. Dispositif selon l'une quelconque des revendications précédentes, dans lequel lesdits au moins deux actionneurs hydrauliques (10, 20) sont reliés à un système hydraulique commun (200, 300), dans lequel le système hydraulique (200, 300) est conçu pour activer hydrauliquement chacun des actionneurs hydrauliques (10, 20).

8. Dispositif selon la revendication 7, dans lequel le système hydraulique (200, 300) comporte un réservoir (201, 301) pour contenir un fluide hydraulique, pour chaque actionneur hydraulique (10, 20), une alimentation (203, 204, 303, 304) pour fournir le fluide hydraulique à un actionneur hydraulique (10, 20), et au moins une pompe (202, 302a, 302b) pour mettre sous pression le fluide hydraulique dans l'alimentation (203, 204, 303, 304), chaque alimentation (203, 204, 303, 304) entre la pompe (202, 302a, 302b) et l'actionneur hydraulique (10, 20) pouvant en outre être reliée pour une communication de fluide avec le réservoir (201, 301) par l'intermédiaire d'une dérivation (208, 209, 308, 309), et dans lequel la dérivation (208, 209, 308, 309) comprend une vanne (210, 310) pour ouvrir ou bloquer alternativement la liaison avec le réservoir (201, 301).

9. Dispositif selon la revendication 8, dans lequel le système hydraulique (200) comporte une alimentation commune (205) qui dévie dans lesdites au moins deux alimentations (203, 204), le dispositif comportant en outre une pompe (202) dans l'alimentation commune (205) pour mettre sous pression le fluide hydraulique dans lesdites au moins deux alimentations (203, 204).

10. Dispositif selon la revendication 9, dans lequel le dispositif comprend une pompe pour chaque alimentation pour mettre sous pression le fluide hydraulique dans l'alimentation respective.

11. Dispositif selon la revendication 10, dans lequel lesdites au moins deux pompes sont entraînées pour fournir des débits du fluide hydraulique dans un rapport prédéterminé l'un par rapport à l'autre.

12. Dispositif selon la revendication 11, dans lequel le rapport de débits correspond sensiblement à un rapport de mélange souhaité des composants pour former le matériau dentaire.
